# EUROPÄISCHE PATENTANMELDUNG

(11) **EP 1 097 953 A2**
(43) Veröffentlichungstag der Anmeldung: **09.05.2001**
(21) Anmeldenummer: 00120527.7
(22) Anmeldetag: 20.09.2000
(51) Int. Cl.: C08G 18/18, C08G 18/66

(54) **Verfahren zur Herstellung von Polyurethanschaumstoffen**

(30) Priorität: 03.11.1999 DE 19953060; 08.01.2000 DE 10000494
(71) Anmelder: Otto Bock Schaumstoffwerke GmbH & Co. KG, 37115 Duderstadt (DE)
(72) Erfinder: Thiele, Karl-Heinz, 37115 Duderstadt (DE); Gansen, Peter Dr., 37136 Seeburg (DE)
(74) Vertreter: Läufer, Martina, Dipl.-Chem. rer. nat.

(57) **Zusammenfassung**

Zur Herstellung von Polyurethan-Schaumstoffen, insbesondere von flexiblen bis halbharten Blockschaumstoffen oder Weichformschaumstoffen mit Polyesthern oder Polyethern als Polyolen wird ein Carbamat oder ein Gemisch von Carbamaten gleichzeitig als Treibmittel und als Katalysator verwendet, wobei das Carbamat oder die Carbamate die allgemeine Formel I besitzen: 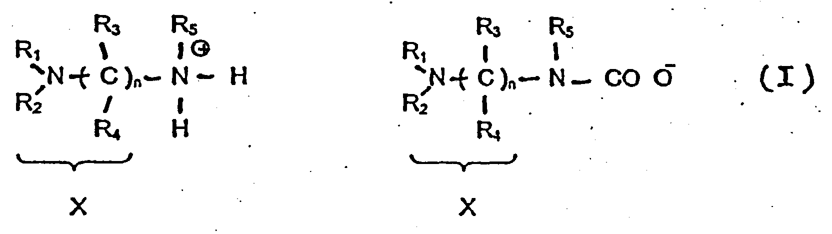 wobei:
R₁ und R₂ für gleiche oder verschiedene Alkylreste stehen,
R₃ und R₄ für gleiche oder verschiedene Reste stehen und Wasserstoff oder Alkylreste bedeuten,
R₅ Wasserstoff, einen Alkanolrest, eine Polyethermonoolrest oder den mit X gekennzeichneten Rest bedeutet,
n für 2 oder 3 steht.

## Beschreibung

Die Erfindung betrifft ein Verfahren zur Herstellung von Polyurethanschaumstoffen, insbesondere von flexiblen bis halbharten Blockschaumstoffen oder Weichformschaumstoffen mit Polyestern oder Polyethern als Polyolen.

Polyurethanschaumstoffe werden üblicherweise durch Vermischen einer Polyisocyanatkomponente aus wenigstens einem Di- oder Polyisocyanat mit einer Polyolkomponente aus wenigstens einem Polyether- oder Polyesterpolyol in Gegenwart wenigstens eines Katalysators und wenigstens eines Treibmittels und ggf. im Beisein verschiedener in der Polyurethanchemie gut bekannter Hilfs- und Zusatzstoffe hergestellt.

Durch gezielte Mitverwendung niedermolekularer Diole als Kettenverlängerer oder von Triolen und Aminen als Vernetzer können die Eigenschaften der PUR-Schaumstoffe in weiten Bereichen eingestellt werden.

Als Treibmittel werden allgemein bei PU-Schaumstoffen hauptsächlich Kohlendioxid oder Halogenalkane verwendet. Die Auswahl des Treibmittels richtet sich unter anderem nach dem aufzuschäumenden Reaktionsgemisch und der gewünschten Festigkeit sowie weiteren Eigenschaften des fertig aufgeschäumten Schaumstoffes. Für die Herstellung härterer Polyurethanschaumstoffe wurden bislang neben Wassser insbesondere Fluorchlorkohlenwasserstoffe (FCKW), Hydrogenfluorchlorkohlenwasserstoffe (HFCKW), Hydrogenfluorkohlenwasserstoffe (HFKW) oder spezielle Carbamate als Treibmittel verwendet.

Wegen der bekannten ökologischen Problematik im Zusammenhang mit den genannten halogenhaltigen Treibmitteln geht deren Verwendung auch im Bereich der Schaumstoffe ständig zurück.

Eine Verwendung von Kohlenwasserstoffen, wie z.B. den isomeren Pentanen bzw. von Cyclopentanen als Treibmittel scheidet meist wegen der leichten Entflammbarkeit der Substanzen aus.

Das übliche Treibmittel bei der Herstellung von flexiblen Blockschaumstoffen oder Formschaumstoffen ist Wasser, welches sich bei der Umsetzung mit Isocyanaten zu Kohlendioxid und Harnstoff umsetzt. Der alleinige Einsatz von Wasser als Treibmittel kann den Nachteil haben, daß der entstehende Harnstoff die Elastizität der entstehenden Schaumstoffe reduziert.

Als Katalysatoren zur Herstellung von Polyurethanschaumstoffen allgemein dienen hauptsächlich tertiäre Amine und zinnorganische Verbindungen. Eine Cokatalyse, z.B. durch Metallkatalysatoren, ist möglich. Insbesondere bei der Herstellung von flexiblen bis halbharten Block- oder Formschaumstoffen werden u.a. einbaubare Katalysatoren verwendet, die über eine primäre oder sekundäre Aminfunktion oder über Hydroxylgruppen in die polymere Matrix eines Polyurethanschaumstoffes eingebunden werden. Diese Katalysatoren weisen jedoch bisher schwerwiegende Nachteile auf.

Zunächst müssen derartige Katalysatoren bislang mit einer geeigneten Cokatalyse eingesetzt werden. Ohne Cokatalyse wird beispielsweise eine unzureichende Aushärtung beobachtet.

Desweiteren führen die meisten bekannten einbaubaren Katalysatoren bei Blockschaumstoffen zu einem Phänomen, das als "Kernverfärbung" bekannt ist - eine beginnende oxidative Zersetzung im Zentrum des Schaumblocks aufgrund der entstehenden Reaktionswärme. Auch ist eine Katalyse mit einbaubaren Katalysatoren bei Blockschaumstoffen bisher nicht bzw. nur schwer aussteuerbar. Das besonders kritische Verhältnis von offenen und geschlossenen Zellen sowie die Zellöffnung zum richtigen Zeitpunkt läßt sich nur schwer einstellen.

Eine weitere Schwierigkeit, die sich bei einer Aktivierung mit einbaubaren Katalysatoren insbesondere bei Blockschaumstoffen auf Polyesterbasis ergibt, ist eine Verschlechterung der Hydrolysenalterung.

Bei der Verwendung von Aminkatalysatoren ergeben sich zusätzlich Probleme mit einer möglichen anhaltenden Aminausdünstung, die zu Geruchsbelästigung oder sogar gesundheitlichen Belastungen führen kann. Die Geruchsbelästigung ist ein besonderes Problem bei Blockschaumstoffen auf Polyesterbasis.

Der Erfindung liegt daher die Aufgabe zugrunde, ein Verfahren zur Herstellung von Polyurethanschaumstoff zur Verfügung zu stellen, bei welchem auf die Mitverwendung umweltschädlicher Treibmittel sowie weitgehend auf herkömmliche Amin-Katalysatoren verzichtet werden kann. Dabei wird angestrebt, daß bei Blockschaumstoffen mit entsprechenden physikalischen Eigenschaften eine deutlich reduzierte Kernverfärbung und eine deutlich geringere Geruchsausdünstung als bei üblichen Schaumstoffen erreicht wird.

Überraschenderweise wurde jetzt gefunden, daß bestimmte Carbamate der nachstehend näher beschriebenen Art Katalysatoren und gleichzeitig Treibmittel darstellen, die insbesondere auch die Herstellung von Polyurethan-Blockschaumstoffen, speziell von flexiblen bis halbharten Blockschaumstoffen sowie Weichformschaumstoffen, ermöglichen. Dabei kann auf die Verwendung von zusätzlichen Treibmitteln ganz oder teilweise verzichtet werden. Darüberhinaus werden herkömmliche Aminkatalysatoren vollständig ersetzt. Eine Co-Katalyse mit anderen die Polyurethanbildung katalysierenden Katalysatoren, beispielsweise bestimmten Metallkatalysatoren, ist jedoch möglich.

Die EP-B 0 121 850 beschreibt zwar bereits die Verwendung bestimmter Carbamate, die Hydroxylgruppen tragen, als Treibmittel für Polyurethanschaumstoffe, wobei diese wie den Ausführungsbeispielen zu entnehmen, vorzugsweise in Kombination mit anderen Treibmitteln zum Einsatz gelangen. Die EP-B 0 121 850 vermittelt jedoch keinen Hinweis auf den überraschenden Befund, daß die Carbamate auch als Katalysatoren für die Herstellung von Polyurethanschaumstoffen eingesetzt werden können. Aufgrund der speziellen Konstitution der dort angegebenen Carbamate können diese die tertiären Amin-Katalysatoren auch nicht ersetzen.

Die EP-B-10652250 beschreibt den Einsatz von hydroxylgruppenhaltigen Carbamaten als ausschließliches Treibmittel für Integralschaumstoffe. Auch hier geht es nicht um den Ersatz von Katalysatoren, vielmehr werden dabei Katalysatoren verwendet, die zu den o.g. unerwünschten Begleiterscheinungen, wie Geruchsbelästigung und PVC-Verfärbung führen.

Zur Lösung der o.g. Aufgabe sieht die Erfindung bei einem Verfahren zur Herstellung von Polyurethanschaumstoff in Gegenwart wenigstens eines Katalysators und wenigstens eines Treibmittels vor, daß ein Carbamat oder ein Gemisch von Carbamaten der allgemeinen Formel I 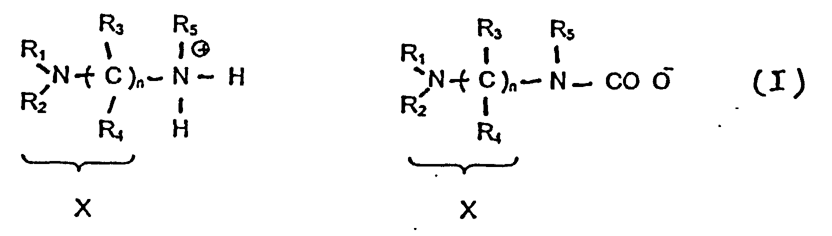 ,wobei:
R₁ und R₂ für gleiche oder verschiedene Alkylreste stehen,
R₃ und R₄ für gleiche oder verschiedene Reste stehen und Wasserstoff oder Alkylreste bedeuten,
R₅ Wasserstoff, einen Alkanolrest, einen Polyethermonoolrest oder den mit X gekennzeichneten Rest bedeutet
n für 2 oder 3 steht,
   als Katalysator und zugleich als Treibmittel verwendet wird, im wesentlichen unter Ausschluß von Aminkatalysatoren.

Das Verfahren führt zu PU-Schaumstoffen, insbesondere Block- und Weichschaumstoffen, die bei gleicher Härte deutlich reduzierte Kernverfärbungen und einen deutlich geringeren Geruch als mit üblichen Katalysatoren hergestellte Schaumstoffe aufweisen.

Die erfindungsgemäß hergestellten Schaumstoffe zeichnen sich durch eine niedrigere Rohdichte, verglichen mit Schaumstoffen, die mit gleichem Wassergehalt hergestellt wurden, problemlose Verarbeitung, reduzierte Aminemissionen und gute Hydrolysestabilität aus. Bei Blockschaumstoffen tritt keine oxidative Kernverfärbung auf.

Unter einem Alkanolrest werden dem Chemiker unter diesem Begriff allgemein bekannte Gruppen verstanden, wie z.B. ein Methanolrest, Ethanolrest, Propanolrest, Isopropanolrest, Butanolrest, Isobutanollrest, t-Butanollrest, Pentanolrest, Hexanolrest, Heptanolrest usw.

Unter "Alkylrest" werden alle unter die allgemeine chemische Definition eines Alkylrestes fallenden Gruppen verstanden, insbesondere Methylreste, Ethylreste, Propylreste, Butylreste, Isopropylreste, Isobutylreste, Tertiärbutylreste, Cyclopropylreste, Cyclopenthylreste, Cyclohexylreste, Cycloheptylreste sowie längerkettige verzweigte oder unverzweigte oder cyclische Alkylreste.

Vorzugsweise ist das Verfahren dadurch gekennzeichnet, daß der Polyurethanschaumstoff aus einem Reaktionsgemisch hergestellt wird, welches enthält:
A) eine Polyisocyanatkomponente mit einem NCO-Gehalt von 25 bis 48,3 Gew.-%, bestehend aus reinem oder modifiziertem Toluylendiisocyanat oder einem oder einem, gegebenenfalls modifizierten Polyisocyanat oder Polyisocyanatgemisch, der Diphenylmethanreihe;
B) eine Polyolkomponente einer mittleren Hydroxylfunktionalität von 2 - 6, bestehend aus wenigstens einem Polyether- oder Polyesterpolyol mit OH-Zahlen < 70,
   ggf. unter Zusatz üblicher Hilfs- und Zusatzstoffe, wie sie aus der Polyurethanchemie bekannt sind.

Weiter vorzugsweise kann das Reaktionsgemisch zusätzlich weitere Polyester- oder Polyether-Polyole oder Abmischungen daraus mit OH-Zahlen von 70 - 400 enthalten.

Als Isocyanatkomponenten sind allgemein aliphatische, cycloaliphatische, araliphatische, aromatische und heterocyclische Polyisocyanate geeignet, wie sie z.B. von W. Siefken in Justus Liebigs Annalen der Chemie, 562, Seiten 75 bis 136, beschrieben werden. Bevorzugt sind solche der Formel Q(NCO)ₙ, in der n=2 bis 4, vorzugsweise 2, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten, z. B. solche Polyisocyanate, wie sie in der DE-OS 28 32 253, Seiten 10 bis 11, beschrieben sind.

Besonders bevorzugt werden die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Die Polyisocyanatkomponente A) ist vorzugsweise bei 20°C flüssig und weist einen NCO-Gehalt von 25 bis 48,3 Gew.%, vorzugsweise von 48,3 Gew.% auf. Es handelt sich bevorzugt um ein reines oder modifiziertes Toluylendiisocyanat oder mindestens ein, gegebenenfalls chemisch modifiziertes, Polyisocyanat oder Polyisocyanatgemisch der Diphenylmethanreihe.

Hierunter sind insbesondere 4,4'-Diisocyanatodiphenylmethan, dessen technische Gemische mit 2,4'-Diisocyanatodiphenylmethan und gegebenenfalls 2,2'-Diisocyanatodiphenylmethan, Gemische dieser Diisocyanate mit ihren höheren Homologen, wie sie bei der Phosgenierung von Anilin/Formaldehyd-Kondensaten anfallen und/oder bei der destillativen Aufarbeitung von derartigen Phosgenierungeprodukten erhalten werden, zu verstehen. Bei der "chemischen Modifizierung" dieser Polyisocyanate handelt es sich insbesondere um die an sich bekannte Urethan-Modifizierung, z.B. durch Umsetzung von bis zu 30 Äquivalentprozent der vorliegenden NCO-Gruppen mit Polypropylenglykolen eines maximalen Molekulargewichts von 700 oder um eine an sich bekannte Carbodiimidisierung von bis zu 30% der vorliegenden NCO-Gruppen.

Die zum Einsatz kommenden Polyetherpolyole enthalten mindestens zwei gegenüber Isocyanaten reaktive Wasserstoffatome und weisen Hydroxylzahlen von 20 bis 400 auf. Sie werden erhalten durch Polyaddition von Alkylenoxiden wie beispielsweise Ethylenoxid, Propylenoxid, Butylenoxid, Dodecyloxid, oder Styroloxid, vorzugsweise Propylenoxid oder Ethylenoxid an Starterverbindungen wie Wasser, Propylenglykol, Ethylenglykol, Glyzerin, Trimethylolpropan, Pentaerythrit, Sorbit oder anderen.

Geeignete Polyesterpolyole sind die an sich bekannten, Hydroxylgruppen aufweisenden Veresterungsprodukte von vorzugsweise zweiwertigen Alkoholen wie beispielsweise Ethylenglykol, Diethylenglykol, Propylenglykol, Neopentylglykol, 1,4-Butandiol, 1,6-Hexandiol mit unterschüssigen Mengen an vorzugsweise difunktionellen Carbonsäuren wie beispielsweise Bernsteinsäure, Adipinsäure, Phthalsäure, Tetrahydrophthalsäure, Hexahydrophthalsäure oder Gemischen derartiger Säuren.

Als Hilfs- und Zusatzmittel werden einerseits die erfindungswesentlichen Carbamate und andererseits Zusatzmittel der an sich bekannten Art verwendet.

Bei den erfindungswesentlichen Carbamaten handelt es sich um Verbindungen der bereits o.g. allgemeinen Formel, wobei die Variablen R₁ bis R₅ und n die bereits o.g. Bedeutung haben.

Vorzugsweise werden solche Carbamate der folgenden allgemeinen Formel (I) eingesetzt, 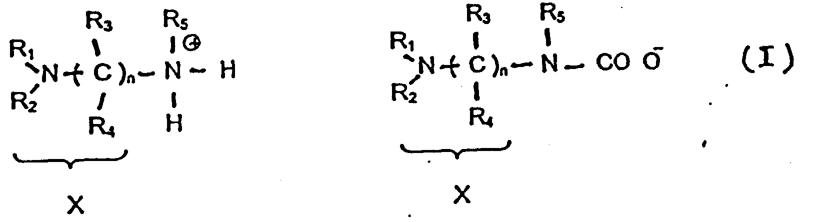 ,wobei:
R₅ Wasserstoff, eine Alkylrest oder den mit X gekennzeichneten Reste bedeuten.
R₁ und R₂ Methylreste bedeuten.
R₃ und R₄ Wasserstoff bedeuten und
n für 3 steht.

Ferner sind solche Carbamate bevorzugt, bei denen R₅ einen Alkanolrest bedeutet, R₁ und R₂ Methylreste bedeuten und R₃ und R₄ für gleiche oder verschiedene Reste stehen und Wasserstoff oder Alkylreste bedeuten.

Die Herstellung der Carbamate kann durch einfache Sättigung der zugrundeliegenden Diamine der Formel II 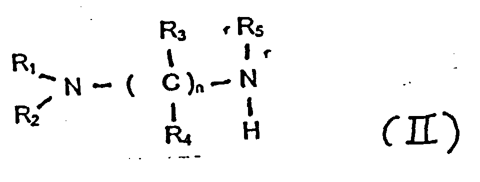 mit gasförmigem oder festem Kohlendioxid bei Temperaturen zwischen 40 und 130°C mit oder ohne Verwendung eines geeigneten Lösungsmittels erfolgen. Bei den zur Diskussion stehenden flexiblen Blockschaumstoffen bzw. Formschaumstoffen hat sich Wasser als Lösungsmittel als besonders geeignet herausgestellt.

Besonders bevorzugt sind 3-Dimethylaminopropylamin und Bis(3-dimethylaminpropyl)amin zur Herstellung der Carbamate oder Gemische dieser Amine.

Als weiteres Treibmittel wird bei den erfindungsgemäßen Schaumstoffen bevorzugt Wasser eingesetzt. Wasser erzeugt durch die Reaktion mit Isocyanat Kohlendioxid. Für bestimmte Schaumstoffqualitäten ist die Mitverwendung von flüssigem oder gasförmigem Kohlendioxid möglich. Andere physikalische Treibmittel können mitverwendet werden, sind aber nicht bevorzugt.

Bei der Durchführung des erfindungsgemäßen Verfahrens wird das als Katalysator verwendete Carbamat in einer Menge von weniger als 8 Gew.-%, vorzugsweise 0,1 bis 6, weiter vorzugsweise 0,3 bis 4 Gew.-%, bezogen auf das Gewicht der Komponente B), verwendet.

Weitere, gegebenenfalls mitzuverwendende Hilfs- und Zusatzmittel sind die bei der Herstellung von Polyurethanschaumstoffen üblichen wie z.B. Aktivatoren oder Stabilisatoren. Weitere Hilfs- und Zusatzstoffe sind beispielsweise oberflächenaktive Zusatzstoffe und Schaumstabilisatoren sowie Zellregler, Reaktionsverzögerer, Stabilisatoren, flammhemmende Substanzen, Weichmacher, Farbstoffe und Füllstoffe sowie fungistatisch und bakteriostatisch wirksame Substanzen. Einzelheiten über die Verwendungs- und Wirkungsweise dieser Zusatzmittel sind z.B. angegeben in: Kunststoff-Handbuch, Band VII, Hrsg. Vieweg und Höchtlen, Carl Hanser Verlag, München 1966, S. 103-113.

Die Ausgangskomponenten werden im übrigen in solchen Mengen eingesetzt, die einer Isocyanat-Kennzahl von 80 bis 120, vorzugsweise 95 bis 105, entsprechen.

Weiterhin kann zusätzlich wenigstens ein Cokatalysator eingesetzt werden, z.B. ein Metallkatalysator wie z.B. Dibutylzinndilaurat oder Zinndioktoat.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, a.a.O., S. 121 - 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage.

In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt.

Man kann jedoch auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Bei der Formverschäumung werden vielfach an sich bekannte "äußere Trennmittel", wie Siliconöle, mitverwendet. Selbstverständlich können aber auch Schaumstoffe durch Blockverschäumung hergestellt werden.

Zur Herstellung von Polyurethan-Blockschaumstoffen konnte im Stand der Technik auf den Einsatz von tertiären Aminen nicht verzichtet werden. Probleme bei den mechanischen Polyurethanschaumstoff-Eigenschaften oder oxidative Kernverfärbung, die eine weitere Verwendung ausschließen konnten nicht vermieden werden, wenn ausschließlich über Amin- oder Hydroxyl-Funktionen einbaubare Katalysatoren zum Einsatz kamen.

Die erfindungsgemäß hergestellten Schaumstoffe sind vorzugsweise flexible Blockschäume, die u.a. für den Einsatz in der Automobilindustrie und der Möbelindustrie vorgesehen sind. Vorteilhaft können die erfindungsgemäßen Blockschaumstoffe auch zur Kaschierung eingesetzt werden.

### Beispiele

Zur Durchführung des erfindungsgemäßen Verfahrens bei der Blockverschäumung können alle Komponenten getrennt dosiert werden, in einer Mischkammer zusammengebracht und anschließend in der bei Blockschaumstoffen üblichen Weise auf ein schräglaufendes Papier aufgetragen. Ebenso ist es möglich, die Zusatzstoffe vorab vorzumischen und als dritte Komponente im Mischkopf zuzudosieren.

Die Temperatur der Reaktionskomponenten (Poyisocyanatkomponente A) bzw. Polyolkomponente) liegt im allgemeinen innerhalb des Temperaturbereichs von 20 bis 45°C.

### Ausgangsmaterialien

Polyisocyanat 1:
   Toluylendiisocyanat mit einem Gehalt an 2,4-Isomeren von 80% und einem Gehalt an 2,6-Isomeren von 20%.
Polyisocyanat 2:
   Toluylendiisocanat mit einem Gehalt an 2,4-Isomeren von 65% und einem Gehalt an 2,6-Isomeren von 35%.
Polyisocyanat 3:
   Polyisocyanat mit einem NCO-Gehalt von 32,5% und einer Viskosität von 25 mPa s, bestehend aus 15% polymerem MDI, einer Konzentration von 2,4'-Diphenylmethandiisocyanat von 24% und einer Konzentration von 4,4'-Diphenylmethandiisocyanat von etwa 64%.
Polyol 1:
   Polyesterpolyol durch Umsetzung von Adipinsäure, Diethylenglykol und Trimethylolpropan (OH-Zahl: 61, Säurezahl 1,4, mittlere Funktionalität ∼ 2,5).
Polyol 2:
   Desmophen 2450 der Bayer AG. Polyester mit einer OH-Zahl von etwa 210.
Polyol 3:
   Polyethertriol der OH-Zahl 36 hergestellt durch Propoxylierung von Trimethylolpropan mit anschließender Ethoxylierung des Propoxylierungsproduktes (PO:EO-Gewichtsverhältnis ∼ 85:15).
Carbamat 1:
   In 400g 3-Dimethylaminopropylamin in 400g Wasser wird bis zur Sättigung CO2 eingeleitet. Die aufgenommene CO₂-Masse beträgt 195g und die Viskosität bei 25°C 95 mPa.s.

Der Geruch wurde nach der VDA-Empfehlung 270 Variante B-3 bestimmt. Die Note 1 steht darin für nicht wahrnehmbar und die Note 6 für unerträglich.

### Beispiele Blockschaumstoff

Die Blockschaumstoffe werden auf einer handelsüblichen Anlage UBT der Firma Henneke hergestellt.

Alle Konzentrationsangaben sind in Gewichtsteilen.

| | Beispiel 1 | Beispiel 2 | Vergleichsbeispiel 1 | Vergleichsbeispiel 2 |
|---|---|---|---|---|
| Polyol 1 | 87 | 87 | 100 | 100 |
| Polyol 2 | 13 | 13 | | |
| Carbamat 1 | 1,2 | 1,4 | | |
| N-Methylmorpholin | | | 1,2 | |
| Dimethylethanolamin | | | | 0,2 |
| SE 232 (3) | 1,0 | 1,0 | | |
| Emulgator EM¹ | | | 2,0 | |
| Emulgator TX¹ | | | 1,5 | |
| Dimethylpiperazin | | | | 0,5 |
| B 8301³ | | | | 1,0 |
| Zinndioktoat | | | | 0,1 |
| Wasser | 2,5 | 2,4 | 3,0 | 3,0 |
| Isocyanat 1 | 12,6 | 18,9 | 42 | 42 |
| Isocyanat 2 | 29,4 | 23,2 | | |
| Rohdichte (g/l) DIN 53420 | 32 | 29 | 31 | 32 |
| Stauchhärte (40%) (kPa) DIN 53577 | 3,6 | 3,6 | 3,6 | 3,8 |
| Druckverformungsrest (50%) (%) DIN 53572 | 8 | 10 | 7 | 9 |
| Bruchdehnung (%) DIN 53571 | 327 | 314 | 270 | 283 |
| Zugfestigkeit (kPa) DIN 53571 | 238 | 192 | 193 | 205 |
| Zugfestigkeit nach Hydrolysealterung (7 Tage, 70°C, 95% Feuchte) | 207 | 185 | 172 | 140 |
| Geruch | 2 | 1,5 | 5 | 4 |
| Aminbestimmung | <5ppm | <5ppm | >60ppm | >60ppm |

| | | | | |
|---|---|---|---|---|
| ¹ Handelsprodukt der Bayer AG | | | | |
| ² Handelsprodukt von Goldschmidt | | | | |
| ³ WITCO | | | | |

Die Aminbestimmung wurde mit handelsüblichen Kurzzeitröhrchen der Firma Dräger Sicherheitstechnik GmbH vorgenommen. Beim Vergleichsbeispiel 2 ist die Hydrolysenalterung schlecht, während der Schaumstoff des Vergleichsbeispiels 1 einen schlechten Geruch hat.

### Herstellung eines erfindungsgemäßen Weichformschaums:

| | Beispiel | Vergleichsbeispiel |
|---|---|---|
| Polyol 3 | 100 | 100 |
| Carbamat 1 | 1,5 | - |
| Toyocat ET¹ | - | 0,2 |
| Dabco 33LV² | - | 0,4 |
| Arcol 2580³ | 2,0 | 2,0 |
| Wasser | 2,4 | 3,0 |
| Stabilisator B4113⁴ | 0,8 | 0,8 |
| Isocyanat | 49,3 | 49,3 |
| Aminbestimmung | <5ppm | >60ppm |

| | | |
|---|---|---|
| ¹ Handelsprodukt der Fa. Tosoh | | |
| ² Handelsprodukt der Fa. Air Products | | |
| ³ Handelsprodukt der Fa. Lyondell | | |
| ⁴ Handelsprodukt der Fa. Goldschmidt | | |

Das Polyol wird mit den angegebenen Stoffen außer dem Isocyanat vorvermischt. Auf einer handelsüblichen Hochdruckmaschine werden jeweils die Formulierung mit dem Isocyanat miteinander vermischt und das Reaktionsgemisch wird in eine 40 Liter Kastenform eingetragen, die auf 50°C erwärmt ist. Die Form wird geschlossen und nach etwa fünf Minuten wird das Formteil entformt. Die Füllmenge wird so gewählt, daß das Formteilgewicht 2,1 kg beträgt. Es resultiert ein üblicher elastischer Weichformschaum. Die Aminbestimmung wird nach einem Tag Lagerung in der vorbeschriebenen Weise durchgeführt.

## Patentansprüche

1. Verfahren zur Herstellung von Polyurethanschaumstoff in Gegenwart wenigstens eines Katalysators und wenigstens eines Treibmittels, **dadurch gekennzeichnet**, daß ein Carbamat oder ein Gemisch von Carbamaten der allgemeinen Formel I 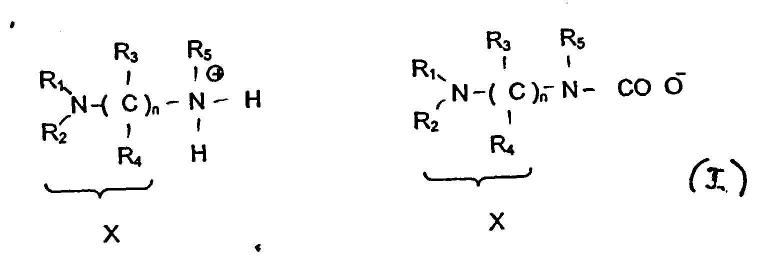 ,wobei:
R₁ und R₂ für gleiche oder verschiedene Alkylreste stehen,
R₃ und R₄ für gleiche oder verschiedene Reste stehen und Wasserstoff oder Alkylreste bedeuten,
R₅ Wasserstoff, eine Alkanolrest, einen Polyethermonoolrest oder den mit X gekennzeichneten Rest bedeutet,
n für 2 oder 3 steht,
als Katalysator und Treibmittel verwendet wird, im wesentlichen unter Ausschluß von Aminkatalysatoren.

2. Verfahren nach Anspruch 1, dadurch gekennzeichnet, daß der Polyurethanschaumstoff aus einem Reaktionsgemisch hergestellt, welches enthält
A) eine Polyisocyanatkomponente mit einem NCO-Gehalt von 25 bis 48,3 Gew.-%, bestehend aus reinem oder modifiziertem Toluylendiisocyanat oder einem gegebenenfalls modifizierten Polyisocyanat oder Polyisocyanatgemisch der Diphenylmethanreihe;
B) eine Polyolkomponente einer mittleren Hydroxylfunktionalität von 2-6 bestehend aus einem oder mehreren Polyether oder Polyesterpolyolen.

3. Verfahren nach Anspruch 2, dadurch gekennzeichnet, daß mindestens 70% der Polyolkomponente B) eine OH-Zahl kleiner als 70 hat.

4. Verfahren nach Anspruch 2 oder 3, dadurch gekennzeichnet, daß die Polyolkomponente B) weiter wenigstens ein Polyester- oder Polyetherpolyol oder eine Abmischung hiervon mit einer OH-Zahl von 70-400 enthält.

5. Verfahren nach Anspruch 4, dadurch gekennzeichnet, daß die Polyolkomponente B) weiter wenigstens ein Polyester- oder Polyetherpolyol oder eine Abmischung hiervon mit einer OH-Zahl von 70-400 in einer Konzentration von 0% - 20% bezogen auf die Polyolkomponente B) enthält.

6. Verfahren nach einem der Ansprüche 1 bis 5, dadurch gekennzeichnet, daß man zusätzlich wenigstens ein weiteres Treibmittel einsetzt.

7. Verfahren nach einem der Ansprüche 1 bis 6, dadurch gekennzeichnet, daß das Treibmittel Wasser ist.

8. Verfahren nach einem der Ansprüche 1 bis 7, dadurch gekennzeichnet, daß man zusätzliche Katalysatoren, Hilfs- und Zusatzstoffe einsetzt

9. Verfahren nach einem der Ansprüche 1 bis 8, dadurch gekennzeichnet, daß die Carbamate in einer Menge von weniger als 8 Gew.-% bezogen auf das Gewicht der Polyolkomponente (B) eingesetzt werden, vorzugsweise in einer Menge zwischen 0,1 und 6 Gew.%, weiter vorzugsweise 0,3 bis 4 Gew.%.

10. Verfahren nach einem der Ansprüche 1 bis 9, dadurch gekennzeichnet, daß die erfindungsgemäßen Katalysatoren zur Herstellung von flexiblen oder viskoelastischen Blockschaumstoffen eingesetzt werden.

11. Verfahren nach einem der Ansprüche 1 bis 9, dadurch gekennzeichnet, daß die erfindungsgemäßen Katalysatoren zur Herstellung von flexiblen oder viskoelastischen Formschaumstoffen eingesetzt werden.
